(19) Europäisches Patentamt European Patent Office Office européen des brevets

(11) **EP 2 855 260 B1**

(12) **FASCICULE DE BREVET EUROPEEN**

(45) Date de publication et mention de la délivrance du brevet:
**06.12.2017 Bulletin 2017/49**

(51) Int Cl.:
***B64B 1/58*** *(2006.01)* ***B64B 1/62*** *(2006.01)*

(21) Numéro de dépôt: **13727276.1**

(86) Numéro de dépôt international:
**PCT/FR2013/051038**

(22) Date de dépôt: **13.05.2013**

(87) Numéro de publication internationale:
**WO 2013/178904 (05.12.2013 Gazette 2013/49)**

(54) **BALLON DIRIGEABLE**

ZEPPELIN

AIRSHIP

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **31.05.2012 FR 1255012**

(43) Date de publication de la demande:
**08.04.2015 Bulletin 2015/15**

(73) Titulaire: **A-NTE (Aero-Nautic Technology & Engineering)**
**92120 Montrouge (FR)**

(72) Inventeurs:
• **REGAS, Baptiste**
**F-83330 Le Castellet (FR)**
• **REGAS, Adrien**
**F-83330 Le Castellet (FR)**
• **JOZAN, Olivier**
**F-44000 Nantes (FR)**

(74) Mandataire: **Cabinet Plasseraud**
**66, rue de la Chaussée d'Antin**
**75440 Paris Cedex 09 (FR)**

(56) Documents cités:
**CH-B1- 698 134   FR-A- 1 126 089**
**FR-A1- 2 170 917   US-A1- 2005 224 638**
**US-A1- 2009 072 082**

EP 2 855 260 B1

**Description**

**DOMAINE TECHNIQUE**

La présente invention est relative aux ballons dirigeables à enveloppe souple.

**ETAT DE LA TECHNIQUE ANTERIEURE**

Plus particulièrement, l'invention concerne un ballon dirigeable, comprenant une enveloppe souple sans structure interne rigide pour imposer une forme à l'enveloppe, ladite enveloppe délimitant un espace intérieur destiné à être au moins partiellement rempli d'un premier gaz plus léger que l'air, s'étendant selon un axe longitudinal entre un nez situé vers l'avant du ballon dirigeable et une queue située vers l'arrière du ballon dirigeable, et comprenant une partie supérieure située vers le haut et une partie inférieure située vers le bas, ladite partie inférieure étant en regard de la partie supérieure.

Le gaz plus léger que l'air contenu dans un ballon se dilate quand le ballon s'élève en altitude, et au contraire se contracte quand le ballon se rapproche du sol.

Les ballons dirigeables à enveloppe souple comprennent ainsi habituellement un ou plusieurs ballonnets gonflés à l'air, lesdits ballonnets étant logés à l'intérieur de l'enveloppe du ballon. Ces ballonnets sont des poches étanches, mises en pression classiquement par des ventilateurs qui injectent dans ces ballonnets de l'air extérieur. La pression de l'air dans les ballonnets met directement en pression le gaz léger remplissant le reste de l'espace intérieur défini par l'enveloppe. La forme de l'enveloppe est ainsi maintenue sensiblement constante quel que soit l'altitude du ballon dirigeable. Cette forme d'enveloppe est habituellement de forme circulaire dans un plan perpendiculaire à l'axe longitudinal.

Le document FR-A-1 126 089 montre un ballon dirigeable avec une enveloppe externe à plusieurs lobes et comprenant un ballonnet interne tel explicité ci-dessus.

L'inconvénient de ces ballons dirigeables comprenant des ballonnets est qu'il est nécessaire d'augmenter le volume de l'enveloppe de manière très importante, et par exemple d'environ 30%, pour loger le ou les ballonnets dans l'espace intérieur de l'enveloppe. De plus, il faut réguler la pression des ballonnets pour conserver la forme extérieure de l'enveloppe.

Il existe également des ballons dirigeables à enveloppe souple dont la forme externe peut varier. Le document FR-A-0 663 009 décrit un exemple d'un tel ballon dirigeable. Il comprend à l'intérieur de l'enveloppe des liens extensibles reliant plusieurs points de l'enveloppe. Les liens reliant trois ou quatre points répartis dans un plan transversal à l'axe longitudinal du ballon, le ballon dirigeable a une forme trilobée ou quadrilobée lorsqu'il est proche du sol, et une forme quasi cylindrique lorsqu'il est en altitude et que le gaz plus léger que l'air se dilate et étire les liens élastiques internes. Ce ballon dirigeable à enveloppe souple ne comprend pas de ballonnet interne, mais la forme de son enveloppe change avec l'altitude.

L'inconvénient des ces ballons dirigeables est que leur forme, qui dépend uniquement de leur altitude, n'est pas contrôlée.

**EXPOSE DE L'INVENTION**

La présente invention a pour but de perfectionner les ballons dirigeables à enveloppe souple, et notamment pour fournir une autre solution de ballon dirigeable adapté pour modifier la forme de l'enveloppe à volonté.

A cet effet, le ballon dirigeable comprend :

- une paroi située à l'intérieur de l'enveloppe, ladite paroi étant souple, étant étanche, s'étendant longitudinalement entre le nez et la queue en séparant l'espace intérieur de l'enveloppe en un premier espace destiné à être rempli dudit premier gaz et un deuxième espace destiné à être rempli d'un deuxième gaz, ledit deuxième espace étant situé en périphérie de l'enveloppe entre un premier point et un second point d'un pourtour dans un plan perpendiculaire à l'axe longitudinal, et
- un organe de pompage adapté pour gonfler le deuxième espace à une pression de contrôle supérieure à une pression du premier espace pour que l'enveloppe prenne une deuxième forme en rapprochant les premier et second points l'un de l'autre, et pour dégonfler le deuxième espace à une pression de contrôle sensiblement égale à la pression du premier espace pour que l'enveloppe prenne une première forme différente de la deuxième forme.

De plus, pour ce ballon dirigeable le deuxième espace est délimité entre une portion de l'enveloppe et la paroi, et la paroi a une longueur curviligne inférieure ou égale à une longueur curviligne de la portion de l'enveloppe, dans le plan perpendiculaire à l'axe.

Grâce à ces dispositions, l'organe de pompage est commandé pour modifier la pression dans le deuxième espace qui peut être gonflé ou dégonflé à volonté. Cette action de gonflement ou dégonflement modifie la forme de la paroi interne qui agit sur l'enveloppe du ballon dirigeable en rapprochant ou éloignant les premier et second points.

La forme générale de l'enveloppe externe du ballon dirigeable est ainsi modifiée.

Dans la deuxième forme de l'enveloppe, le volume de l'espace interne contenant le gaz plus léger que l'air est réduit par rapport à la première forme de cette enveloppe. La forme de l'enveloppe peut ainsi être adaptée à la pression atmosphérique dans laquelle il évolue.

Dans la deuxième forme de l'enveloppe, le ballon dirigeable est moins haut et peut être plus facilement introduit dans un hangar. Les hangars de grande hauteur (supérieure à 15-20 m) sont très rares. Il est plus facile de trouver un hangar adapté. En outre, cette deuxième forme plus aplatie permet d'obtenir une trainée plus faible du ballon, et par conséquent une vitesse de déplacement plus élevée dudit ballon dirigeable.

Dans divers modes de réalisation du ballon dirigeable selon l'invention, on peut éventuellement avoir recours en outre à l'une et/ou à l'autre des dispositions suivantes.

Selon un aspect de l'invention, la première forme de l'enveloppe a une section dans un plan transversal à l'axe longitudinal qui est circulaire, et la deuxième forme de l'enveloppe a une section dans ce même plan transversal comprenant au moins deux lobes.

Selon un aspect de l'invention, la paroi a une longueur curviligne dans un plan perpendiculaire à l'axe longitudinal égale à une distance entre les premier et deuxième points de ladite enveloppe lorsque le deuxième espace est dégonflé, et à une pression de contrôle identique à la pression du premier espace.

Selon un aspect de l'invention, les premier et deuxième points et le centre de l'enveloppe lorsque le deuxième espace est dégonflé forment un angle qui est compris entre 60 degrés et 100 degrés, et qui est compris de préférence entre 70 degrés et 90 degrés.

Selon un aspect de l'invention, le ballon dirigeable comprend une première paroi et une deuxième paroi situées à l'intérieur de l'enveloppe, lesdites parois étant souples, étant étanche, s'étendant longitudinalement entre le nez et la queue en séparant l'espace intérieur de l'enveloppe en un premier espace destiné à être rempli dudit premier gaz, et un deuxième et troisième espaces destinés à être remplis d'un deuxième gaz, ledit premier espace étant situé entre les deuxième et troisième espaces, et lesdites parois étant placées symétriquement l'une de l'autre par rapport à un plan vertical comprenant l'axe longitudinal lorsque lesdits deuxième et troisième espaces sont dégonflés.

Selon un aspect de l'invention, le ballon dirigeable comprend en outre au moins un ballonnet interne gonflé par de l'air et adapté pour mettre en pression le premier espace, ledit ballonnet interne étant situé à l'intérieur du premier espace et n'interagissant pas avec l'enveloppe.

Selon un aspect de l'invention, l'organe de pompage est relié au premier espace et au deuxième espace pour extraire une quantité du premier gaz du premier espace pour l'injecter dans le deuxième espace pour gonfler le deuxième espace, ou inversement pour dégonfler le deuxième espace.

Selon un aspect de l'invention, l'organe de pompage est intégré dans la paroi à l'intérieur de l'enveloppe du ballon dirigeable.

Selon un aspect de l'invention, l'organe de pompage est relié à l'extérieur de l'enveloppe et au deuxième espace pour pomper une quantité du deuxième gaz de l'extérieur de l'enveloppe et l'injecter dans le deuxième espace pour gonfler le deuxième espace, ou inversement pour dégonfler le deuxième espace.

## BREVE DESCRIPTION DES DESSINS

D'autres caractéristiques et avantages de l'invention apparaîtront au cours de la description suivante de plusieurs modes de réalisation, donnés à titre d'exemples non limitatifs, en regard des dessins joints.

Sur les dessins :

- la figure 1 est une vue de côté longitudinale du ballon dirigeable selon l'invention,
- la figure 2 est une vue en coupe transversale du ballon dirigeable de la figure 1, dans un premier état de fonctionnement,
- la figure 3 est une vue en coupe transversale du ballon dirigeable de la figure 1, dans un deuxième état de fonctionnement,
- la figure 4 est un tracé représentant une variation de surface de l'enveloppe du ballon dirigeable de la figure 1 en fonction d'un angle qui est un paramètre de construction de ce ballon dirigeable,
- la figure 5 est une vue en coupe longitudinale du ballon dirigeable de la figure 1, et
- les figures 6 et 7 sont des vues en coupe équivalentes des figures 2 et 3, pour montrer les définitions de distance, de longueurs curvilignes et d'angles des éléments du ballon dirigeable de la figure 1,
- les figures 8 et 9 sont des vues en coupe équivalentes des figures 2 et 3, correspondant à un autre mode de réalisation du ballon dirigeable de la figure 1.

**EP 2 855 260 B1**

**DESCRIPTION DETAILLEE DE MODES DE REALISATION**

Sur les différentes figures, les mêmes références désignent des éléments identiques ou similaires.

La direction avant mentionnée dans cette description doit s'entendre comme la direction allant dans la direction X désignée sur les figures. La direction arrière est alors dans la direction opposée. De manière similaire, le haut ou une partie supérieure mentionnée doit s'entendre comme la direction Z désignée sur les figures. Ces directions ne sont mentionnées que pour aider la lecture et la compréhension de l'invention.

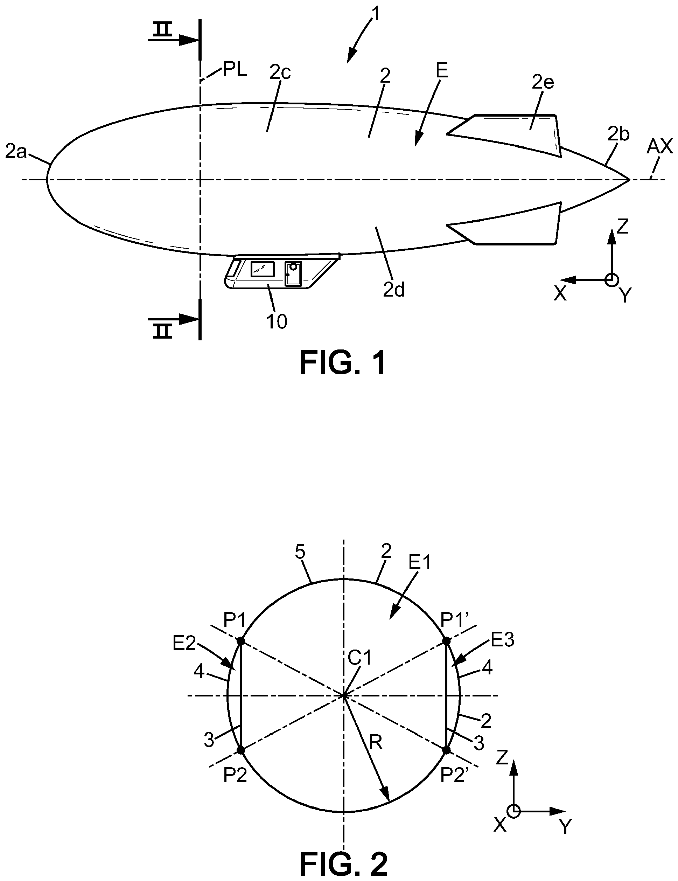

Comme cela est visible sur la **figure 1,** le ballon dirigeable 1 comporte :

- une enveloppe souple 2 sans structure interne rigide et enfermant un premier gaz plus léger que l'air,
- une nacelle 10 destinée à transporter par exemple un pilote.

L'enveloppe 2 délimite un espace intérieur E par rapport à l'espace extérieur. L'espace intérieur E contient le premier gaz plus léger que l'air adapté pour fournir la force de portance et pour soulever vers le haut le ballon dirigeable 1. L'espace extérieur correspond à l'environnement fait d'air dans lequel se déplace le ballon. Le premier gaz (plus léger que l'air) est par exemple de l'hydrogène ou de l'hélium, tel que cela est connu. La force de portance est une force exercée sur l'enveloppe vers le haut qui correspond à une force dite d'Archimède appliquée à l'air déplacé par le volume de l'enveloppe 2 du ballon contenant ledit premier gaz plus léger que l'air :

$$Portance = \rho.g.V$$

avec

$\rho$     masse volumique de l'air,
*g*     accélération de pesanteur, et
*V*     volume d'air déplacé.

Ce volume *V* est celui de l'enveloppe 2, sans compter les volumes de ballonnets gonflés à l'air. Autrement dit, c'est le volume pris par le premier gaz.

L'enveloppe 2 est allongée sensiblement selon un axe longitudinal AX entre un nez 2a situé vers l'avant dudit ballon dirigeable et une queue 2b située vers l'arrière dudit ballon dirigeable. La queue 2b comporte des ailerons ou un empennage 2e adapté pour assurer la stabilité dans la direction d'avancement du vol du ballon dirigeable. L'enveloppe souple 2 comporte vers le haut (au dessus d'un plan sensiblement horizontal et passant par l'axe longitudinal AX) une partie supérieure 2c et vers le bas (au dessous du plan horizontal passant par l'axe AX) une partie inférieure 2d.

L'empennage 2e comprend des gouvernes de profondeur et de direction pour diriger le ballon dirigeable. La nacelle 10 est reliée à la partie inférieure 2d de l'enveloppe entre le nez 2a et la queue 2b.

L'invention concerne des ballonnets gonflables utilisés pour compenser la variation de pression avec l'altitude. Le premier gaz (plus léger que l'air) contenu dans le ballon se dilate quand le ballon s'élève en altitude, et au contraire se contracte quand le ballon se rapproche du sol.

Comme évoqué en introduction, des ballonnets sont habituellement intégrés complètement à l'intérieur de l'espace intérieur délimité par l'enveloppe 2 du ballon dirigeable. Des ventilateurs gonflent ces ballonnets par de l'air extérieur au ballon pour compenser la contraction du gaz au niveau du sol, et les dégonflent progressivement lorsque le ballon dirigeable s'élève en altitude et que le gaz plus léger que l'air se dilate. Le ballon dirigeable de l'art antérieur, avec des ballonnets, conserve ainsi la forme extérieure générale de son enveloppe. Il conserve par exemple une section circulaire de cette enveloppe. Les ballonnets de ces ballons dirigeables ont une enveloppe ou paroi qui n'interagit pas avec l'enveloppe du ballon. Notamment, ils sont incapables de modifier la forme de cette enveloppe externe du ballon.

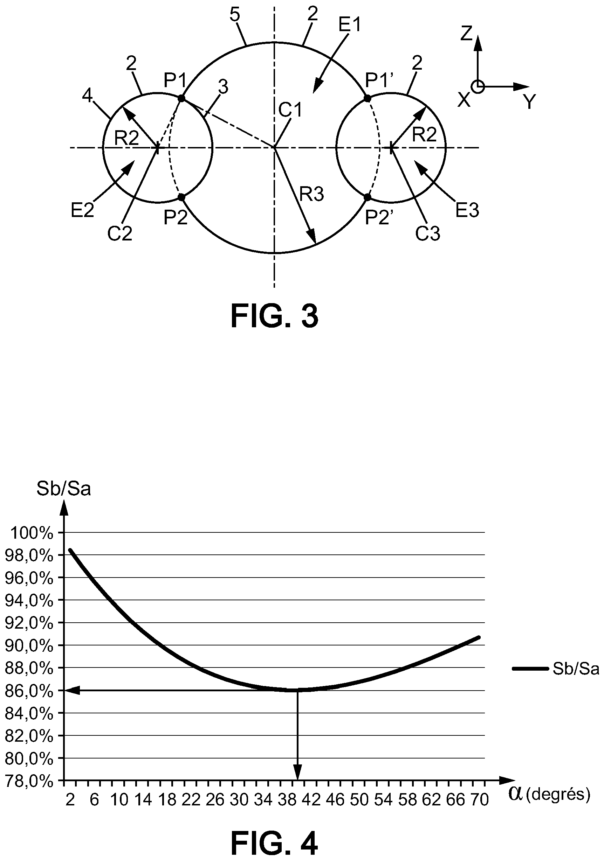

Selon la présente invention, le ballon dirigeable comprend au moins un ballonnet particulier qui interagit avec l'enveloppe externe 2 du ballon dirigeable, et dont l'illustration est donnée dans les coupes des **figures 2 et 3.** Ce ballonnet particulier est formé au moins par une paroi 3 située à l'intérieur de l'enveloppe 2. Cette paroi 3 est souple et étanche par rapport à l'enveloppe externe 2. Elle est reliée à celle-ci en au moins deux points P1 et P2 tel que décrit ci-dessous.

Ces deux figures présentent un mode de réalisation de l'invention comprenant deux parois 3 délimitant chacune un espace E2, E3, dans l'espace intérieur E de l'enveloppe 2. Cependant, le ballon dirigeable peut avoir une seule paroi 3 ou un nombre quelconque de parois 3 réparties autour de la périphérie de l'enveloppe 2.

Selon un mode préféré de l'invention représenté sur les **figures 2 et 3,** le ballon dirigeable comprend deux parois 3 disposées verticalement et symétriquement par rapport au plan vertical XZ passant par l'axe AX. Les parois 3 s'étendent longitudinalement entre le nez et la queue en séparant l'espace intérieur E de l'enveloppe 2 en un premier espace E1 rempli dudit premier gaz et des deuxième et troisième espaces E2, E3 destinés à être rempli d'un deuxième gaz. Dans la suite de la description, il ne sera fait référence par simplicité qu'à un seul des espaces E2, E3, la description s'appliquant également à l'autre des espaces.

La figure 2 présente une coupe du ballon dirigeable 1 dans un plan PL sensiblement perpendiculaire à l'axe longitudinal AX du ballon dirigeable dans un premier état de fonctionnement correspondant à un état en altitude dans lequel l'enveloppe 2 a une forme circulaire (deuxième et troisième espaces dégonflés).

La figure 3 présente une même coupe du ballon dirigeable 1 selon l'invention dans un deuxième état de fonctionnement correspondant à un état proche du sol, dans lequel les deuxième et troisième espaces E2, E3 sont gonflés, et l'enveloppe 2 a une forme à trois lobes (dite « trilobée »). Le premier lobe correspond à la forme de l'enveloppe 2 du premier espace E1, et les deuxième et troisième lobes correspondent aux formes de l'enveloppe 2 du deuxième et troisième espace E2, E3.

Un ballon dirigeable qui ne comprendrait qu'une seule paroi 3 aurait alors une forme à deux lobes dans le deuxième état, le nombre de lobes étant de un supérieur au nombre de parois 3 du ballon dirigeable.

Le deuxième espace est donc situé en périphérie de l'enveloppe 2 entre un premier point P1 et un second point P2 d'un pourtour dans un plan PL perpendiculaire à l'axe longitudinal. Notamment, un point C1, situé au centre de l'enveloppe dans ce plan PL (et positionné sur l'axe AX), est à l'intérieur du premier espace E1, et n'est pas dans le deuxième espace E2. Le troisième espace E3 est respectivement situé en périphérie de l'enveloppe 2 entre un autre premier point P1' et un autre deuxième point P2', et sans inclure le point C1 au centre du premier espace.

Le deuxième espace E2 est délimité par la paroi 3 qui a une forme de segment rectiligne et par une portion de l'enveloppe 4 qui a la forme d'un arc de cercle. La position des points P1 et P2 est repéré par l'angle $\alpha$ formé par une droite horizontale et un rayon du cercle de l'enveloppe 2 passant par le point P1. Dans le présent mode de réalisation, les points P1 et P2 sont positionnés symétriquement par rapport à ladite droite horizontale.

Le ballon dirigeable 1 selon l'invention comprend en outre un organe de pompage qui est adapté pour gonfler le deuxième espace E2 à une pression de contrôle PC supérieure à une première pression PR1 du premier espace E1 pour que l'enveloppe prenne une deuxième forme en rapprochant les premier et second points P1, P2 l'un de l'autre comme par exemple représenté en figure 3, et pour dégonfler le deuxième espace E2 à une pression de contrôle PC sensiblement égale à la pression PR1 du premier espace E1 pour que l'enveloppe prenne une première forme différente de la deuxième forme, ladite première forme correspondant par exemple à la forme de la figure 2.

Grâce à ces dispositions, le ballon dirigeable peut changer de forme externe en vol. L'enveloppe peut ainsi passer de la deuxième forme à la première forme, et inversement, en actionnant l'organe de pompage. Cela permet par exemple d'adapter la forme de l'enveloppe à la pression atmosphérique et/ou à son altitude et/ou son évolution (vitesse d'avancée).

En figure 2, l'enveloppe 2 a une première forme circulaire de rayon $R$, imposée par la première pression PR1 supérieure à la pression de l'atmosphère PA (air) de l'environnement dans lequel se trouve le ballon. Le deuxième espace E2 (ballonnet) est à une pression de contrôle PC sensiblement égale à la première pression PR1.

En figure 3, l'enveloppe 2 a une deuxième forme de type trilobée, imposée par la pression de contrôle PC du deuxième espace E2 supérieure à la première pression PR1 du premier espace E1, la première pression PR1 étant elle-même supérieure à la pression de l'atmosphère PA (air) de l'environnement dans lequel est le ballon. Le deuxième espace E2 a ainsi une forme circulaire de rayon $R_2$, alors que le premier espace a une forme externe également circulaire de rayon $R_3$.

La pression atmosphérique PA est de l'ordre de 1013 hPa (hectopascals).

Le ballon dirigeable 1 aura alors par exemple :

- une première pression PR1 du premier espace E1 égale à la pression atmosphérique à laquelle on ajoute une surpression comprise entre 200 Pa (pascals) et 1600 Pa, c'est à dire :

$$\texttt{PR1 = PA + (200 à 1600 Pa)},$$

- une pression de contrôle PC du deuxième espace E2 égale à la première pression PR1 à laquelle on ajoute une autre surpression comprise entre 200 Pa (pascals) et 1600 Pa, c'est à dire :

$$\texttt{PC = PR1 + (200 à 1600 Pa)}.$$

On assure que la pression de contrôle PC est supérieure à la première pression PR1, qui est elle-même supérieure à la pression atmosphérique PA.

L'enveloppe 2 et les parois 3 sont constituées d'un matériau souple mais non extensible. La géométrie trilobée de la figure 3 est alors imposée par les longueurs curvilignes de la figure 2.

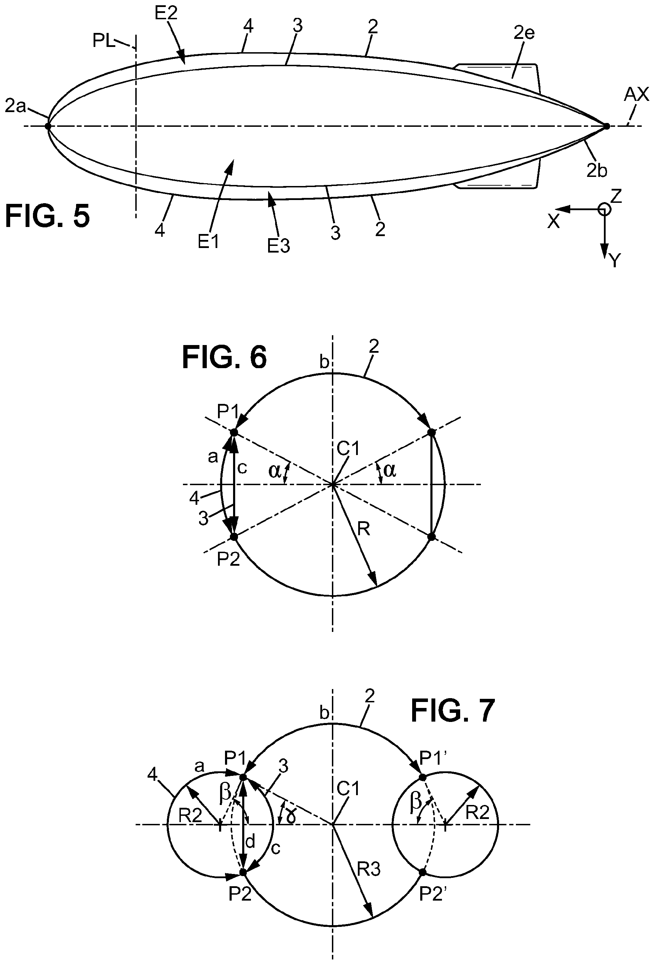

Pour plus de lisibilité, ces définitions de longueurs et de distances ont été reportées sur les **figures 6 et 7,** correspondant aux figures 2 et 3 respectives.

La géométrie trilobée peut être déterminée par exemple par les calculs décrits ci-dessous, ou par toute méthode numérique utilisant un outil de calcul basé sur un schéma des géométries.

On définit les longueurs ou distances suivantes :

*a* est la longueur curviligne de la portion 4 de l'enveloppe 2 entre les points P1 et P2,

*b* est la longueur curviligne de la portion complémentaire 5 de l'enveloppe 2 entre les deux points P1 et P1',

*c* est la longueur curviligne de la paroi 3 sur la figure 6, qui correspond dans le mode de réalisation présenté à la distance entre les premier et deuxième points P1, P2, et

*d* est la distance entre les points P1 et P2 sur la figure 7, et

On définit les angles suivants :

$\alpha$ est l'angle entre le rayon du premier espace E1 passant par le point P1 et la droite horizontale sur la figure 6,

$\beta$ est l'angle entre le rayon du deuxième espace E2 passant par le point P1 et la droite horizontale sur la figure 7, et

$\gamma$ est l'angle entre le rayon du premier espace E1 passant par le point P1 et la droite horizontale sur la figure 7.

En figure 6, on a les équations suivantes :

$$a = R.2.\alpha \qquad (1)$$

$$b = R.(\pi - 2.\alpha) \qquad (2)$$

$$c = R.2.\sin\alpha \qquad (3)$$

En figure 7, on a les équations suivantes :

$$a = R_2.2.(\pi - \beta) \qquad (4)$$

$$b = R_3.(\pi - 2.\gamma) \qquad (5)$$

$$c = R_2.2.\beta \qquad (6)$$

$$d = R_2.2.\sin\beta = R_3.2.\sin\gamma ; \qquad (7)$$

Une résolution de ces équations aboutit à une équation du type :

$$R.\frac{(\alpha + \sin\alpha)}{\pi}.\sin\beta = R.\frac{(\pi - 2.\alpha)}{(\pi - 2.\gamma)}.\sin\gamma$$

qui permet de déterminer l'angle $\gamma$ de la figure 7 pour tout angle $\alpha$ de la figure 6. Toutes les autres variables des équations (1) à (7) peuvent alors être déterminées en fonction du rayon *R* de l'enveloppe 2 de la figure 6.

La paroi 3 telle que définie par l'invention permet de réduire la surface transversale de l'enveloppe 2 dans la configuration de la figure 7 (enveloppe trilobée).

La surface de la section de l'enveloppe 2 en figure 6 est notée $S_a$, et la surface de la section de l'enveloppe 2 en figure 7 est notée $S_b$. Ces surfaces correspondent à la surface dans le plan PL de l'espace interne E, ou autrement dit des espaces E1, E2, et E3.

On a alors les valeurs suivantes pour ces surfaces :

$$S_a = \pi . R^2 \; ,$$

et

$$S_b = R_3{}^2 . (\pi - 2. \gamma + 2. \cos \gamma \sin \gamma) \\ + R_2{}^2 . (2. \pi - 2. \beta + 2. \cos \beta \sin \beta) .$$

En reprenant les équations précédentes, il est possible de montrer que le rapport $S_b/S_a$ n'est fonction que de l'angle $\alpha$. Ce rapport est tracé en **figure 4.** Ce rapport présente un minimum pour une valeur d'angle $\alpha$ comprise entre 20 degrés et 60 degrés. Dans cette plage de valeur, le rapport des surfaces $S_b/S_a$ est diminué de 12%.Si la valeur de l'angle $\alpha$ est comprise entre 35 degrés et 45 degrés, le rapport des surfaces $S_b/S_a$ est encore plus proche du minimum, et il est diminué de 14%.

Autrement dit, les premier et deuxième points P1, P2 et le centre de l'enveloppe C1 lorsque le deuxième espace E2 est dégonflé forment un angle qui est le double de l'angle $\alpha$ du calcul présenté ci-dessus. Si cet angle est compris entre 40 degrés et 120 degrés, on obtient une diminution du rapport des surfaces de 12%, et si cet angle est compris entre 70 degrés et 90 degrés, on obtient une diminution améliorée de 14%.

Grâce à ces gammes de variation pour l'angle $\alpha$, ledit angle étant un paramètre de construction du ballon dirigeable selon l'invention, la variation de surface est optimale. On peut ainsi obtenir une diminution de 14% de ladite surface dans le deuxième état de fonctionnement (deuxième et troisième espaces gonflés). Il est donc possible de réduire le volume de l'enveloppe 2 dans les mêmes proportions.

La hauteur du ballon dirigeable 1 (distance entre des points extrêmes de l'enveloppe 2 dans la direction Z) est ainsi inférieure dans le deuxième état de fonctionnement (figure 3) par rapport au premier état de fonctionnement (figure 2). La hauteur du ballon est ainsi réduite de 16%, ce qui permet de mieux introduire le ballon dirigeable 1 dans un hangar au sol. Un tel hangar est plus répandu et est moins coûteux.

La **figure 5** représente une coupe longitudinale du ballon dirigeable 1 qui montre que la paroi 3 s'étend longitudinalement entre le nez 2a du ballon dirigeable et la queue 2b du ballon dirigeable.

Les éléments du ballon dirigeable selon l'invention ont avantageusement une forme dans une coupe d'un plan transversal PL qui conserve des proportions équivalentes quelle que soit la position longitudinale de ce plan entre le nez et la queue du ballon. Notamment, l'angle $\alpha$ de construction de la géométrie, tel que défini plus haut, est avantageusement constant longitudinalement. La variation de surface obtenue par le rapport $S_b/S_a$ implique donc une variation de volume de l'espace E de l'enveloppe 2 qui est identique.

Le deuxième espace E2 compris entre la portion 4 de l'enveloppe 2 et la paroi 3 s'étend donc sur une grande distance. La variation de volume réalisable avec le deuxième espace E2 est liée à la distance entre le nez et la queue. Cette variation de volume est ainsi très grande, et le ballon dirigeable 1 selon l'invention est adapté pour faire varier le volume pris par le premier gaz (plus léger que l'air) selon la variation de rapport calculée ci-dessus.

Selon le mode de réalisation présenté de l'invention, la paroi 3 a une longueur curviligne **c** dans un plan perpendiculaire à l'axe longitudinal égale à une distance entre les premier et deuxième points P1, P2 de ladite enveloppe lorsque le deuxième espace est dégonflé à une pression de contrôle PC sensiblement égale à la pression du premier gaz dans le premier espace E1 (premier état de fonctionnement de la figure 2). On a ainsi la relation suivante :

$$c = distance(P1, P2)_{PC=PR1} .$$

Dans ce mode de réalisation la paroi 3 est alors tendue à l'intérieur de l'enveloppe 2 lorsque cette enveloppe a une forme circulaire et que le deuxième espace est dégonflé.

Grâce à cette disposition, dès que le deuxième espace est gonflé à une pression de contrôle PC supérieure à la première pression PR1 du premier espace E1, la paroi 3 se déforme en arc de cercle vers l'intérieur du ballon dirigeable 1 et les premier et deuxième points P1, P2 se rapprochent l'un de l'autre. La paroi 3 interagit donc immédiatement avec l'enveloppe 2 dès le début du gonflage du deuxième espace E2.

Selon une variante de ce mode de réalisation, la paroi 3 peut avoir une longueur curviligne c supérieure à ladite distance entre les premier et deuxième points de la figure 2. On a ainsi la relation suivante :

$$c > distance(P1, P2)_{PC=PR1} .$$

Dans ce cas, l'enveloppe 2 se déforme moins et la variation de volume obtenue est plus faible. Mais, les points P1 et P2 peuvent être également rapprochés l'un de l'autre lorsque le deuxième espace E2 est gonflé.

Avantageusement, la paroi 3 a une longueur curviligne inférieure ou égale à la longueur curviligne de la portion 4 de l'enveloppe 2. On a ainsi la relation suivante :

$$c <= a .$$

Dans tous les cas ci-dessus, la variation du rapport reste importante, et par exemple supérieure à 10% entre les premier et deuxième états de fonctionnement du ballon dirigeable.

La paroi 3 peut aussi avoir une longueur curviligne $c$ supérieure à la longueur curviligne de la portion 4. Cependant dans ce cas, il est attendu à ce que la variation du rapport soit moins importante.

La paroi 3 peut avoir une longueur curviligne $c$ sensiblement égale à la longueur curviligne $a$ de la portion 4, c'est-à-dire égale à plus ou moins dix pourcents (+/- 10%) de la longueur curviligne $a$. Dans ce cas, la variation du rapport reste significative. Ainsi, il est avantageux d'avoir $c<=1,1.a$.

La paroi 3 peut donc avoir une longueur curviligne $c$ différente de la distance entre les points P1 et P2 de la figure 2, tout en conservant un effet sur l'enveloppe 2, qui rapproche lesdits premier et deuxième points P1, P2 lorsque le deuxième espace est gonflé.

Selon le mode de réalisation présenté sur les figures 1 à 7, les premier et deuxième points P1, P2 sont placés symétriquement par rapport à un plan horizontal XY.

De cette façon, le ballon dirigeable a une hauteur minimale dans la direction verticale Z dans le deuxième état de fonctionnement de la figure 3 (gonflé).

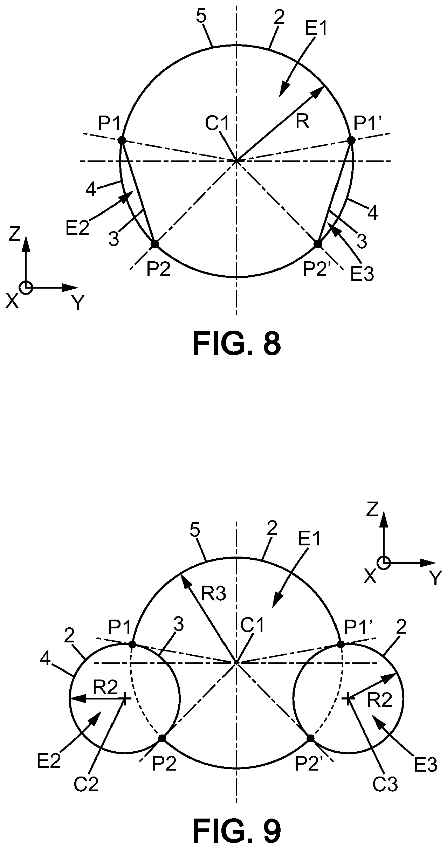

Selon un autre mode de réalisation de l'invention présenté sur les **figures 8 et 9**, les premier et deuxième points P1, P2 ne sont pas placés symétriquement par rapport au plan horizontal XY. Ces points sont par exemple placés plus bas sur le contour transversal de l'enveloppe 2.

De cette façon, les deuxième et troisième espaces E2, E3 s'étendent latéralement vers le bas (dans une direction médiane des points P1 et P2), dans le deuxième état de fonctionnement de la figure 9. Le ballon dirigeable 1 peut conserver une hauteur globale très réduite dans ce deuxième état, tout en ayant un comportement aérodynamique différent en vol. Cette configuration augmente la portance en vol (lorsque le ballon avance).

Selon le premier mode de réalisation présenté en figures 1 à 7, les deuxième et troisième espaces sont symétriques l'un de l'autre par rapport par rapport à un plan vertical XZ.

De cette façon, le ballon dirigeable 1 reste symétrique par rapport à ce plan vertical XZ dans le deuxième état de fonctionnement de la figure 3 (gonflé).

Selon un autre mode de réalisation non représenté sur les figures, le ballon dirigeable 1 comprend plusieurs parois 3 pour créer une pluralité d'espace annexes, ces espaces sont alimentés en deuxième gaz par un ou plusieurs organes de pompage.

Selon encore un autre mode de réalisation non représenté sur les figures, l'invention n'exclut pas l'utilisation de ballonnets à air situés à l'intérieur du premier espace E1 pour mettre en pression ce premier espace. Même si ces ballonnets n'interagissent pas avec l'enveloppe 2 externe du ballon dirigeable 1.

Grâce à cette combinaison, la variation de volume peut être encore plus grande. Les ballonnets à air à l'intérieur du premier espace permettent par exemple d'obtenir une variation de volume de 30%. Dans le cas du mode de réalisation des figures 2 et 3, cette combinaison permet d'obtenir une variation de 30%+14% = 44% du volume du premier gaz. Ceci permet de faire évoluer le ballon dirigeable dans une gamme d'altitude plus importante.

Réciproquement, les ballonnets à air du ballon dirigeable peuvent être réduits en volume. Par exemple, ils peuvent fournir une variation de volume de 30%-14% = 16%. Un tel ballon dirigeable n'a pas une plus grande gamme d'altitude, mais il peut changer de forme ce qui lui permet d'autres évolutions en vol.

Dans cette combinaison comprenant les espaces annexes de l'invention (deuxième et troisième espaces E2, E3) et les ballonnets à air, il est possible d'avoir également une variation de volume sensiblement indépendante de la variation de forme.

De cette façon, il est possible de faire voler le ballon dirigeable 1 avec une forme prédéterminée, la première forme, la deuxième forme ou toute forme intermédiaire entre la première et deuxième forme, sur au moins une plage étendue d'altitudes.

Il est par exemple possible de faire voler le ballon dirigeable avec la deuxième forme sur une plage d'altitudes pour bénéficier d'une trainée réduite, et d'une vitesse maximale de déplacement du ballon dirigeable plus grande. On note également que la deuxième forme de l'enveloppe permet de bénéficier d'un effet de portance dynamique, lorsque le ballon dirigeable avance ; effet du même type que celui de la portance générée par une aile d'avion.

En outre, le ballon dirigeable 1 peut comprendre un ballonnet avant situé à proximité du nez 2a et un ballonnet arrière situé à proximité de la queue 2b, comme cela est connu pour aider les manoeuvres en vol et notamment pour cabrer ou faire piquer le nez du ballon dirigeable.

Selon un mode de réalisation de l'invention, le deuxième gaz est identique au premier gaz. Ceci signifie que le gaz contenu dans les deuxième et troisième espaces E2, E3 est par exemple de l'hélium ou de l'hydrogène.

L'organe de pompage est relié au premier espace E1 et au deuxième espace E2 pour extraire une quantité du premier gaz du premier espace pour l'injecter dans le deuxième espace pour gonfler le deuxième espace, ou inversement pour dégonfler le deuxième espace.

Le premier gaz plus léger que l'air est dans un volume comprenant l'ensemble des premier et deuxième espaces (et éventuellement du troisième espace).

Le volume pris par ce premier gaz peut être varié selon de grandes plages de variation comme cela a été démontré ci-dessus.

Eventuellement, l'organe de pompage peut alors être intégré dans la paroi 3, à l'intérieur de l'enveloppe 2 du ballon dirigeable, ce qui simplifie la construction.

Les fuites du premier gaz sont ainsi limitées, puisque celui-ci reste confiné à l'intérieur de l'enveloppe 2 externe du ballon.

Selon un autre mode de réalisation de l'invention, le deuxième gaz est différent du premier gaz. Notamment le deuxième gaz peut être de l'air extrait à l'extérieur du ballon dirigeable 1 par l'organe de pompage.

L'organe de pompage est relié à l'extérieur de l'enveloppe et au deuxième espace pour pomper une quantité du deuxième gaz de l'extérieur de l'enveloppe et l'injecter dans le deuxième espace pour gonfler le deuxième espace, ou inversement pour dégonfler le deuxième espace.

Le volume pris par le premier gaz est uniquement le volume du premier espace E1.

Eventuellement, l'organe de pompage peut alors être intégré dans la portion 4 de l'enveloppe 2, ce qui simplifie la construction. Par exemple, l'organe de pompage est un ou plusieurs ventilateurs.

Selon un mode de réalisation de l'invention, le ballon dirigeable comprend en outre un sélecteur d'entrée pour l'organe de pompage et le gaz injecté dans le deuxième espace est sélectionnable par le pilote ou par un dispositif de commande. Par exemple, l'air extérieur ou le premier gaz contenu dans le premier espace peut être injecté dans le deuxième espace.

Le ballon dirigeable 1 est alors encore plus configurable à volonté.

Eventuellement, l'organe de pompage est situé dans la nacelle 10 du ballon dirigeable. Il est alors relié au deuxième espace E2 (troisième espace E3 respectivement) et éventuellement au premier espace E1, par des tuyaux qui font transiter le deuxième gaz entre l'organe de pompage et ledit deuxième espace E2 (E3 respectivement).

Dans les divers modes de réalisation de l'invention, l'enveloppe 2 du ballon dirigeable est une enveloppe dite « souple ». L'air s'écoule tout autour de l'enveloppe souple du ballon dirigeable 1. L'enveloppe 2 comprend une surface souple et en contact avec l'écoulement de l'air dans lequel le ballon dirigeable 1 est destiné à voler. L'enveloppe 2 n'a pas de structure interne rigide, et n'est pas recouverte par une structure externe rigide, tout au moins selon une grande partie de la surface externe de l'enveloppe souple 2 : Par exemple 80 % de cette surface, est au moins en contact avec l'écoulement de l'air.

## Revendications

**1.** Un ballon dirigeable, comprenant :

- une enveloppe (2) souple sans structure interne rigide pour imposer une forme à l'enveloppe, ladite enveloppe délimitant un espace intérieur (E) destiné à être au moins partiellement rempli d'un premier gaz plus léger que l'air, s'étendant selon un axe longitudinal (AX) entre un nez (2a) situé vers l'avant du ballon dirigeable et une queue (2b) située vers l'arrière du ballon dirigeable, et comprenant une partie supérieure (2c) située vers le haut et une partie inférieure (2d) située vers le bas, ladite partie inférieure étant en regard de la partie supérieure,
- une paroi (3) située à l'intérieur de l'enveloppe, ladite paroi étant souple, étant étanche, s'étendant longitudinalement entre le nez et la queue en séparant l'espace intérieur de l'enveloppe en un premier espace (E1) destiné à être rempli dudit premier gaz et un deuxième espace (E2) destiné à être rempli d'un deuxième gaz, ledit deuxième espace étant situé en périphérie de l'enveloppe entre un premier point (P1) et un second point (P2) d'un pourtour dans un plan perpendiculaire à l'axe longitudinal (AX), et

- un organe de pompage adapté pour gonfler le deuxième espace à une pression de contrôle supérieure à une pression du premier espace pour que l'enveloppe prenne une deuxième forme en rapprochant les premier et second points l'un de l'autre, et pour dégonfler le deuxième espace à une pression de contrôle sensiblement égale à la pression du premier espace pour que l'enveloppe prenne une première forme différente de la deuxième forme,

ledit ballon dirigeable étant **caractérisé en ce que**

le deuxième espace (E2) est délimité entre une portion de l'enveloppe (4) et la paroi (3), et
la paroi (3) a une longueur curviligne (c) inférieure ou égale à une longueur curviligne (a) de la portion de l'enveloppe (4), dans le plan perpendiculaire à l'axe (AX).

2. Le ballon dirigeable selon la revendication 1, dans lequel la première forme de l'enveloppe a une section dans un plan transversal à l'axe longitudinal qui est circulaire, et la deuxième forme de l'enveloppe a une section dans ce même plan transversal comprenant au moins deux lobes.

3. Le ballon dirigeable selon l'une des revendications 1 à 2, dans lequel la paroi (3) a une longueur curviligne dans un plan perpendiculaire à l'axe longitudinal égale à une distance entre les premier et deuxième points de ladite enveloppe lorsque le deuxième espace (E2) est dégonflé, et à une pression de contrôle identique à la pression du premier espace.

4. Le ballon dirigeable selon l'une des revendications 1 à 3, dans lequel les premier et deuxième points (P1, P2) et le centre de l'enveloppe (C1) lorsque le deuxième espace est dégonflé forment un angle qui est compris entre 60 degrés et 100 degrés, et qui est compris de préférence entre 70 degrés et 90 degrés.

5. Le ballon dirigeable selon l'une des revendications 1 à 4, comprenant une première paroi et une deuxième paroi situées à l'intérieur de l'enveloppe, lesdites parois (3) étant souples, étant étanche, s'étendant longitudinalement entre le nez et la queue en séparant l'espace intérieur de l'enveloppe en un premier espace (E1) destiné à être rempli dudit premier gaz, et un deuxième et troisième espaces destinés à être remplis d'un deuxième gaz, ledit premier espace étant situé entre les deuxième et troisième espaces, et lesdites parois étant placées symétriquement l'une de l'autre par rapport à un plan vertical comprenant l'axe longitudinal lorsque lesdits deuxième et troisième espaces sont dégonflés.

6. Le ballon dirigeable selon l'une des revendications 1 à 5, comprenant en outre au moins un ballonnet interne gonflé par de l'air et adapté pour mettre en pression le premier espace (E1), ledit ballonnet interne étant situé à l'intérieur du premier espace et n'interagissant pas avec l'enveloppe (2).

7. Le ballon dirigeable selon l'une des revendications 1 à 6, dans lequel l'organe de pompage est relié au premier espace et au deuxième espace pour extraire une quantité du premier gaz du premier espace pour l'injecter dans le deuxième espace pour gonfler le deuxième espace, ou inversement pour dégonfler le deuxième espace.

8. Le ballon dirigeable selon la revendication 7, dans lequel l'organe de pompage est intégré dans la paroi (3) à l'intérieur de l'enveloppe du ballon dirigeable.

9. Le ballon dirigeable selon l'une des revendications 1 à 8, dans lequel l'organe de pompage est relié à l'extérieur de l'enveloppe et au deuxième espace pour pomper une quantité du deuxième gaz de l'extérieur de l'enveloppe et l'injecter dans le deuxième espace pour gonfler le deuxième espace, ou inversement pour dégonfler le deuxième espace.

**Patentansprüche**

1. Luftschiff, umfassend:

- eine biegsame Hülle (2) ohne starre Innenstruktur, um der Hülle eine Form aufzuzwingen, wobei die besagte Hülle einen Innenraum (E) eingrenzt, der dazu bestimmt ist, um zumindest teilweise mit einem ersten Gas leichter als Luft gefüllt zu werden, sich entlang einer Längsachse (AX) zwischen einer Nase (2a), die sich im vorderen Bereich des Luftschiffes befindet und einem Endstück (2b) erstreckt, das sich im hintere Bereich des Luftschiffes befindet, und einen oberen Abschnitt (2c) umfassend, der sich im oberen Bereich befindet und einen unteren Abschnitt (2d), der sich im unteren Bereich befindet, wobei der besagte untere Abschnitt gegenüber dem oberen Abschnitt ist,

- eine Wand (3), die sich im Inneren der Hülle befindet, wobei die besagte Wand biegsam ist, dicht ist, sich in Längsrichtung zwischen der Nase und dem Endstück erstreckt und den Innenraum der Hülle in einen ersten Raum (E1), der dazu bestimmt ist, mit dem besagten ersten Gas gefüllt zu werden, und einen zweiten Raum (E2) unterteilt, der dazu bestimmt ist, um mit einem zweiten Gas gefüllt zu werden, wobei sich der besagte zweite Raum an der Peripherie der Hülle zwischen einem ersten Punkt (P1) und einem zweiten Punkt (P2) eines Umfangs auf einer Ebene senkrecht zur Längsachse (AX) befindet, und

- ein Pumporgan, das ausgeführt ist, um den zweiten Raum mit einem Kontrolldruck aufzublasen, der größer ist, als ein Druck des ersten Raumes, damit die Hülle eine zweite Form durch die Annäherung des ersten und zweiten Punktes zueinander einnimmt, und um den zweiten Raum auf einen Kontrolldruck abzulassen, der in etwa gleich dem Druck des ersten Raumes ist, damit die Hülle eine erste Form einnimmt, die sich von der zweiten Form unterscheidet,

wobei das besagte Luftschiff **dadurch gekennzeichnet ist, dass** der zweite Raum (E2) zwischen einem Abschnitt der Hülle (4) und der Wand (3) eingegrenzt ist, und

die Wand (3) eine krummlinige Länge (c) kleiner oder gleich einer krummlinigen Länge (a) des Abschnitts der Hülle (4) auf der Ebene senkrecht zur Achse (AX) aufweist.

2.  Luftschiff nach Anspruch 1, wobei die erste Form der Hülle einen Querschnitt auf einer querlaufenden Ebene zur Längsachse aufweist, der kreisförmig ist, und die zweite Form der Hülle einen Querschnitt auf dieser selben querlaufenden Ebene zumindest zwei Lappen umfasst.

3.  Luftschiff nach einem der Ansprüche 1 bis 2, wobei die Wand (3) eine krummlinige Länge auf einer Ebene senkrecht zur Längsachse gleich einem Abstand zwischen dem ersten und zweiten Punkt der besagten Hülle aufweist, wenn der zweite Raum (E2) abgelassen ist, und auf einem Kontrolldruck gleich dem Druck des ersten Raums.

4.  Luftschiff nach einem der Ansprüche 1 bis 3, wobei der erste und der zweite Punkt (P1, P2) und das Zentrum der Hülle (CI), wenn der zweite Raum abgelassen ist, einen Winkel bilden, der zwischen 60 Grad und 100 Grad enthalten ist, und der vorzugsweise zwischen 70 Grad und 90 Grad enthalten ist.

5.  Luftschiff nach einem der Ansprüche 1 bis 4, eine erste Wand und eine zweite Wand umfassend, die sich im Inneren der Hülle befinden, wobei die besagten Wände (3) biegsam sind, dicht sind, sich in Längsrichtung zwischen der Nase und dem Endstück erstrecken und den Innenraum der Hülle in einen ersten Raum (E1), der dazu bestimmt ist, mit dem besagten ersten Gas gefüllt zu werden, und einen zweiten und dritten Raum unterteilen, die dazu bestimmt sind, um mit einem zweiten Gas gefüllt zu werden, wobei sich der besagte erste Raum zwischen dem zweiten und dritten Raum befindet, und die besagten Wände symmetrisch zueinander im Verhältnis zu einer vertikalen Ebene platziert sind, die die Längsachse umfasst, wenn der besagte zweite und dritte Raum abgelassen sind.

6.  Luftschiff nach einem der Ansprüche 1 bis 5, darüber hinaus zumindest einen internen Ballon umfassend, der mit Luft aufgeblasen ist, und ausgeführt ist, um den ersten Raum (E1) unter Druck zu setzen, wobei sich der besagte interne Ballon im Inneren des ersten Raumes befindet und nicht mit der Hülle (2) interagiert.

7.  Luftschiff nach einem der Ansprüche 1 bis 6, wobei das Pumporgan mit dem ersten Raum und mit dem zweiten Raum verbunden ist, um eine Menge des ersten Gases aus dem ersten Raum zu extrahieren, um es in den zweiten Raum zu injizieren, um den zweiten Raum aufzublasen, oder umgekehrt, um den zweiten Raum abzulassen.

8.  Luftschiff nach Anspruch 7, wobei das Pumporgan in die Wand (3) im Inneren der Hülle des Luftschiffes integriert ist.

9.  Luftschiff nach einem der Ansprüche 1 bis 8, wobei das Pumporgan mit dem Äußeren der Hülle und mit dem zweiten Raum verbunden ist, um eine Menge des zweiten Gases vom Äußeren der Hülle abzupumpen und es in den zweiten Raum zu injizieren, um den zweiten Raum aufzublasen, oder umgekehrt, um den zweiten Raum abzulassen.

**Claims**

1.  An airship, comprising:

- a flexible envelope (2) without a rigid internal structure imposing a shape on the envelope, said envelope delimiting an inside space (E) intended to be at least partially filled with a lighter-than-air first gas, extending along a longitudinal axis (AX) between a nose (2a) located at the front of the airship and a tail (2b) located at the back of the airship, and comprising an upper portion (2c) located at the top and a lower portion (2d) located at the bottom, said lower portion being opposite the upper portion,

- a wall (3) located inside the envelope, said wall being flexible, being gas-tight, extending longitudinally between the nose and the tail thus separating the inside space of the envelope into a first space (E1) intended to be filled with said first gas and a second space (E2) intended to be filled with a second gas, said second space being located on the periphery of the envelope between a first point (P1) and a second point (P2) of a perimeter within a plane perpendicular to the longitudinal axis (AX), and

- a pumping device adapted for inflating the second space to a control pressure greater than a pressure of the first space so that the envelope assumes a second shape by bringing the first and second points closer together, and for deflating the second space to a control pressure substantially equal to the pressure of the first space so that the envelope assumes a first shape that is different from the second shape

said airship being **characterized by**

the second space (E2) is delimited between a portion of the envelope (4) and the wall (3), and

the wall (3) has a curvilinear length (c) less than or equal to a curvilinear length (a) of the portion of the envelope (4), in the plane perpendicular to the axis (AX).

2. Airship according to claim 1, wherein the first shape of the envelope has a cross-section in a plane transverse to the longitudinal axis which is circular, and the second shape of the envelope has a cross-section in this same transverse plane which comprises at least two lobes.

3. Airship according to any of claims 1 to 2, wherein the wall (3) has a curvilinear length in a plane perpendicular to the longitudinal axis which is equal to a distance between the first and second points of said envelope when the second space (E2) is deflated, and at a control pressure identical to the pressure of the first space.

4. Airship according to one of claims 1 to 3, wherein the first and second points (P1, P2) and the center of the envelope (C1) when the second space is deflated form an angle which is between 60 degrees and 100 degrees, and preferably between 70 degrees and 90 degrees.

5. Airship according to one of claims 1 to 4, comprising a first wall and a second wall both located inside the envelope, said walls (3) being flexible, being gas-tight, extending longitudinally between the nose and the tail thus separating the inside space of the envelope into a first space (E1) intended to be filled with said first gas, and second and third spaces intended to be filled with a second gas, said first space being located between the second and third spaces, and said walls being placed symmetrically to each other relative to a vertical plane comprising the longitudinal axis when said second and third spaces are deflated.

6. Airship according to one of claims 1 to 5, additionally comprising at least one internal ballonet inflated with air and adapted for pressurizing the first space (E1), said internal ballonet being located inside the first space and not interacting with the envelope (2).

7. Airship according to any of claims 1 to 6, wherein the pumping device is connected to the first space and to the second space in order to extract a quantity of the first gas from the first space to inject it into the second space in order to inflate the second space, or conversely in order to deflate the second space.

8. Airship according to claim 7, wherein the pumping device is integrated into the wall (3) inside the envelope of the airship.

9. Airship according to one of claims 1 to 8, wherein the pumping device is connected to the outside of the envelope and to the second space in order to pump a quantity of the second gas from outside the envelope and inject it into the second space in order to inflate the second space, or conversely in order to deflate the second space.

**FIG. 1**

**FIG. 2**

**FIG. 3**

**FIG. 4**

FIG. 5

FIG. 6

FIG. 7

FIG. 8

FIG. 9

**EP 2 855 260 B1**

**RÉFÉRENCES CITÉES DANS LA DESCRIPTION**

**Documents brevets cités dans la description**

- FR 1126089 A
- FR 0663009 A